# EUROPEAN PATENT APPLICATION

(11) **EP 2 529 867 A1**
(43) Date of publication of application: **05.12.2012**
(21) Application number: 10844756.6
(22) Date of filing: 28.12.2010
(51) Int. Cl.: B23C 1/06, B23Q 5/22

(54) **BORING DEVICE**

(30) Priority: 29.01.2010 JP 2010019541
(71) Applicant: Yagisita, Hukuzo, Numazu-shi, Shizuoka 410-8501 (JP); OSG Corporation, Aichi 442-0005 (JP)
(72) Inventor: YAGISITA, Hukuzo, Numazu-shi Shizuoka 410-8501 (JP)
(74) Representative: Dempster, Benjamin John Naftel
(86) International application number: PCT/JP2010/073902
(87) International publication number: WO 2011/093002

(57) **Abstract**

An eccentric rotation drive mechanism (16) which is rotatably contained in a first slide container (17-1) is provided with an outer cylinder (19), an internal cylinder (20) which is housed at eccentric position thereof and a first air motor (15) contained therein. One end of a rotation shaft portion (3), that is, a shaft of the first air motor (15) is fastened to a hole making tool (1), the other end of which is coupled to the end surface of the outer cylinder (19) through a first reduction device (14-1). The rotation of the air motor (15) makes the hole making tool (1) rotate and revolve and simultaneously the rotation of a second air motor (24) mounted outside of a casing (7) is transmitted to a ball screw (12a) through a rotation transmission device inside of a second slide container (17-2) to advance and retreat a feed drive mechanism (13) so as to machine a hole in a workpiece (5).

## Description

### Technical Field

The present invention relates to a hole making apparatus which can use an end mill or the same kind tool as an end mill to machine a hole in fiber-reinforced plastics, their laminates, and other workpieces at a high accuracy.

### Background Art

Recently, to lighten the weight of fuselages of aircrafts and bodies of automobiles and other vehicles, etc., the fuselages themselves, the bodies themselves, or their components have been formed by fiber-reinforced plastics (FRP). Such fiber-reinforced plastics are being provided in various forms such as thermosetting plastics which contain carbon fibers as reinforcing fibers inside them (CFRP), thermosetting plastics which contain glass fibers as reinforcing inside them (GFRP), and thermosetting plastics which contain aromatic polyamide, aromatic polysulfone, aromatic polyimide, and other heat resistant synthetic resin fibers as reinforcing fibers inside them. Usually, it is known to stack a plurality of fiber-reinforced plastic layers with the reinforcing fibers contained perpendicular to or slanted from each other to form a laminate of fiber-reinforced plastics.

### Citations List

### Patent Literature

PLT 1: W02008/146462

### Summary of Invention

When using fiber-reinforced plastic for the fuselage or body of an aircraft, automobile, etc. or their components, it becomes necessary to machine holes for passing through bolts, etc. at the connecting part between the components. However, when using a general-use drilling apparatus which mounts a drill or other tool to a shaft portion and merely makes it rotate so as to drill a hole in fiber-reinforced plastic (for example, thermosetting plastic containing carbon fiber, glass fiber, etc. as reinforcing fiber and their laminates), there have been the problems that remarkable heat generation occurs due to the frictional resistance during the drilling, the flatness at the drilled surface where the fiber-reinforced plastic, etc. is drilled ends up remarkably deteriorating, and the life of the drill or other hole making tool ends up becoming extremely short.

This is believed that, when using a general-use drilling apparatus to machine a hole in fiber-reinforced plastic, at locations where the internal reinforcing fiber (for example, carbon fiber, glass fiber, etc.) is arranged in the same direction as the cutting direction of cutting edge the frictional resistance due to the friction between the cutting edges of the drill or other hole making tool and the reinforcing fiber becomes excessive, excessive heat is generated and built up, and this heat has an effect on the matrix material of the fiber-reinforced plastic, that is, the synthetic resin (for example, epoxy resin or other thermosetting resin), resulting in formation of irregularities at the drilled surface. Further, excessive heat generation has a detrimental effect on the cutting edges of the hole making tool, so the life of the hole making tool ends up being shorter.

The inventors, in consideration of such a situation, proposed a hole making apparatus and hole making method for a workpiece in order to improve the accuracy of holes and sufficiently lengthen the tool life (in particular, the cutting edges) (see PLT 1).

However, in the art of PLT 1, a system was used wherein a single air motor was used as the drive device of the hole making apparatus and the cutting tool was rotated and fed by this single drive device, so there was the problem that the freedom of adjustment of the rotational direction, rotational speed, and feed rate was restricted and the machining conditions could not be easily set, etc.

The object of the present invention is to provide a hole making apparatus which solves these problems, enables combinations of rotational speed and feed rate to be more freely and easily set, improves the operability further for machining composite materials or hard-to-machine materials, and, further, enables finishing work by zero cut operations to be efficiently performed.

According to one aspect of the present invention, there is provided a hole making apparatus comprised of an eccentric rotation drive mechanism comprised of passages for air for causing a first air motor which is provided at an intermediate part in a longitudinal direction of a rotation shaft portion on an axis of a hole making tool to rotate and an eccentric cylindrical member (outer cylinder) in which a cylindrical member (inner cylinder) which forms the passages are fit, which is coupled to the first air motor through a first reduction device, and which has an eccentric axis (center axis of outer cylinder) which is parallel with the axis of the hole making tool integrally formed together, a first slide container in which the eccentric rotation drive mechanism is rotatably contained, a feed drive mechanism which is provided with a second air motor, transmitting means by which a rotational motion by the second air motor can be transmitted, a second reduction device, and a ball screw, a second slide container which contains a part of the transmitting means, the second reduction device and a part of the ball screw and which advances and retreats in the axial direction of the hole making tool by the feed drive mechanism, and a casing in which the first slide container and the second slide container are contained, the casing is provided with a fixed nut with which the ball screw is engaged at an opposite end to the hole making tool and with a sliding means for making the first slide container and the second slide container slide, the first slide container and the second slide container are coupled by a coupling member, and the hole making tool can rotate about its axis and simultaneously revolve around the eccentric axis (center axis of outer cylinder) of the eccentric cylindrical member (outer cylinder) to machine a hole in a workpiece.

According to another aspect of the present invention, furthermore, there is provided a hole making apparatus in which the transmitting means is provided with a driven side timing pulley which is provided inside of the second slide container, a drive side timing pulley which is attached to an output shaft of the second air motor, and a timing belt which couples the drive side timing pulley with the driven side timing pulley, an input shaft of the second reduction device is coupled to an end of a shaft of the driven side timing pulley, the ball screw is coupled to an output shaft of the reduction device, and furthermore the ball screw is engaged with the fixed nut, the second air motor is made to rotate so as to make the drive side timing pulley rotate, the rotation is transmitted by the timing belt to the driven side timing pulley so as to drive the second slide container, and thereby the first slide container which contains the eccentric rotation drive mechanism is made to advance and retreat in the axial direction and machine a hole in the workpiece.

According to another aspect of the present invention, furthermore, there is provided a hole making apparatus wherein the eccentric rotation drive mechanism is provided with a holder which holds the hole making tool at a front end of a rotation shaft portion, the axis of the hole making tool has a center axis of the rotation which is eccentric from the center axis of the cylindrical member (inner cylinder), the first reduction device is coupled to an opposite end from the holder of the cylindrical member (inner cylinder), the eccentric cylindrical member (outer cylinder) is formed integrally with the cylindrical member (inner cylinder) contained inside and is coupled to the output side of the first reduction device, and the rotation shaft portion is contained rotatably at a position which is eccentric from the center axis of the eccentric cylindrical member (outer cylinder) and is revolvable around an eccentric axis (center axis of outer cylinder) which is parallel with the axis of the hole making tool, and when the drive power of the second air motor of the feed drive mechanism is used to make the eccentric rotation drive mechanism move in the longitudinal direction of the rotation shaft portion, the first air motor causes the rotation shaft portion to rotate the hole making tool to rotate and an input shaft of the first reduction device connected to the end of the rotation shaft portion to rotate simultaneously, so that the eccentric cylindrical member (outer cylinder) which is coupled to an output side of the first reduction device revolves by a predetermined reduction ratio around the eccentric axis (center axis of outer cylinder) so as to make the hole making tool rotate about its axis and simultaneously revolve around the eccentric axis (center axis of outer cylinder).

According to another aspect of the present invention, furthermore, there is provided a hole making apparatus wherein the hole making of the workpiece is executed by a down cut where the rotational direction and the revolution direction of the hole making tool are different from each other.

According to another aspect of the present invention, furthermore, there is provided a hole making apparatus wherein the coupling member couples with the first slide container at an end of the second slide container at an opposite side to the holder of the hole making tool which is provided at the front end of the rotation shaft portion, and the ball screw and the fixed nut are arranged on substantially the same line with the center axis of the eccentric cylindrical member (outer cylinder).

According to another aspect of the present invention, furthermore, there is provided a hole making apparatus wherein the hole making tool is an end mill.

According to another aspect of the present invention, furthermore, there is provided a hole making apparatus wherein the workpiece is a laminate of fiber-reinforced plastic layers or a composite material of the laminate composed of fiber-reinforced plastic layers and a metal material.

According to another aspect of the present invention, furthermore, there is provided a hole making apparatus wherein the eccentric rotation drive mechanism and the feed drive mechanism of the hole making apparatus are driven independently by respective single air motors which are driven by a single air source.

According to another aspect of the present invention, furthermore, there is provided a hole making apparatus wherein the eccentric rotation drive mechanism and the feed drive mechanism of the hole making apparatus are driven by using a single switching lever which is provided at the second slide container and by using stoppers so as to change between advance and retreat of the feed drive mechanism, by using a speed changing switch to detect a predetermined position in the axial direction of the eccentric rotation drive mechanism, so that the speeds of rotation and revolution of the hole making tool contained in the eccentric rotation drive mechanism and the advance feed rate of the feed drive mechanism can be changed separately.

According to another aspect of the present invention, there is provided a hole making apparatus wherein the eccentric rotation drive mechanism and the feed drive mechanism of the hole making apparatus are driven independently by respective single electric motors.

According to another aspect of the present invention, furthermore, there is provided a hole making apparatus wherein the eccentric rotation drive mechanism and feed drive mechanism of the hole making apparatus are driven by using a single switching lever which is provided at the second slide container and by using stoppers so as to change between advance and retreat of the feed drive mechanism, by using a speed changing switch to detect a predetermined position in the axial direction of the eccentric rotation drive mechanism, so that the speeds of rotation and revolution of the hole making tool contained in the eccentric rotation drive mechanism and the advance feed rate of the feed drive mechanism can be changed separately.

According to another aspect of the present invention, furthermore, there is provided a hole making apparatus wherein the eccentric rotation drive mechanism and feed drive mechanism of the hole making apparatus are driven by using a single switching lever which is provided at the second slide container and by using a change in magnitude of an electrical signal of a force detection sensor which is built into the end of the fixed nut after advance driving of the feed drive mechanism so as to automatically change the speeds of rotation and revolution of the hole making tool which is contained in the eccentric rotation drive mechanism and automatically switch the advance speed of the feed drive mechanism and, furthermore, further change the speeds of rotation and revolution of the hole making tool and automatically change to high speed retreat drive of the feed drive mechanism after the electrical signal of the force detection sensor becomes zero, and automatically stop after returning to the start position.

According to another aspect of the present invention, furthermore, there is provided a hole making apparatus wherein a hole making apparatus which is driven by two (first and second) electric motors is fastened to a hand of an articulated robot which has at least five degrees of freedom.

According to another aspect of the present invention, there is provided a CNC machining center characterized in that an eccentric rotation drive mechanism which is driven by a first electric motor in the hole making apparatus, a first slide container of the hole making apparatus, and the members relating to the drive of the eccentric rotation drive mechanism at least are attached to a spindle of the CNC machining center or drilling machine and are combined with X-, Y-, and Z-direction feed mechanisms of the machining center.

According to another aspect of the present invention, there is provided a CNC machining center characterized in that an eccentric rotation drive mechanism which is driven by a first air motor in the hole making apparatus, a first slide container of the hole making apparatus, and the members relating to the drive of the eccentric rotation drive mechanism at least are attached to a spindle of the CNC machining center or a drilling machine and are combined with X-, Y-, and Z-direction feed mechanisms of the machining center.

According to another aspect of the present invention, furthermore, there is provided a hole making apparatus characterized in that the machining area is covered by an expandable accordion-like bellows and all of the cutting chips can be sucked up and collected through a suction hole in the bellows.

According to the hole making apparatus of the present invention, it is possible to independently execute the operation for driving rotation and revolution of the hole making tool by the first air motor in the eccentric rotation drive mechanism and the operation for advance and retreat of the feed device by the second air motor in the feed drive mechanism and possible to more freely and easily set the combination of rotation and revolution speed and feed rate of the hole making tool. This is advantageous for operability, etc. when machining composite materials or hard-to-machine materials.

Further, it is possible to maintain the rotational and revolution direction of the hole making tool at the time of advance and retreat in the same direction and possible to efficiently execute finishing work by zero cut.

Further, according to the hole making apparatus of the present invention, intermittent cutting can be used to keep down the rise in temperature at the cutting locations, so it is possible to provide an apparatus where hole making becomes possible giving a good finished surface with substantially no "craters" at the inner surface of the machined hole in a CFRP or other fiber-reinforced plastic laminate, excessive generation of heat at the machined surface can be suppressed to thereby extend the life of the hole making tool, and the need for economic, high accuracy hole making of a superposed plate of CFRP laminates and Ti alloy, which has become a particular issue in plants for assembly of aircraft fuselages in recent years, can be satisfied.

Further, by driving the eccentric rotation drive mechanism and feed drive mechanism independently by respective single electric motors, it is possible to simplify the drive mechanism and further lighten the hole making apparatus.

### Brief Description of the Drawings

FIG. 1 is an overall side cross-sectional view which shows a first embodiment of a hole making apparatus according to the present invention.
FIG. 2 is an enlarged cross-sectional view of a state where a taper lock at a front end part of the apparatus of FIG. 1 is mounted to a jig mounting plate.
FIG. 3 is a cross-sectional view along A-A of FIG. 1 showing the location of an introduction hole of air of an air motor part cut away.
FIG. 4 is a cross-sectional view along B-B of FIG. 1 showing a mounted state of a slide guide between a casing and a first slide container.
FIG. 5 is a view which shows a method of adjustment of an amount of eccentricity, wherein (a) is a schematic view of the plan cross-section of an outer cylinder, inner cylinder, and shaft portion and (b) is a view which shows an amount of eccentricity when a phase angle of the inner cylinder with respect to the outer cylinder is θ.
FIG. 6 is an overall side cross-sectional view which shows a second embodiment of a hole making apparatus according to the present invention.

### Description of Embodiments

Below, a first embodiment of the present invention will be explained in detail based on the drawings.

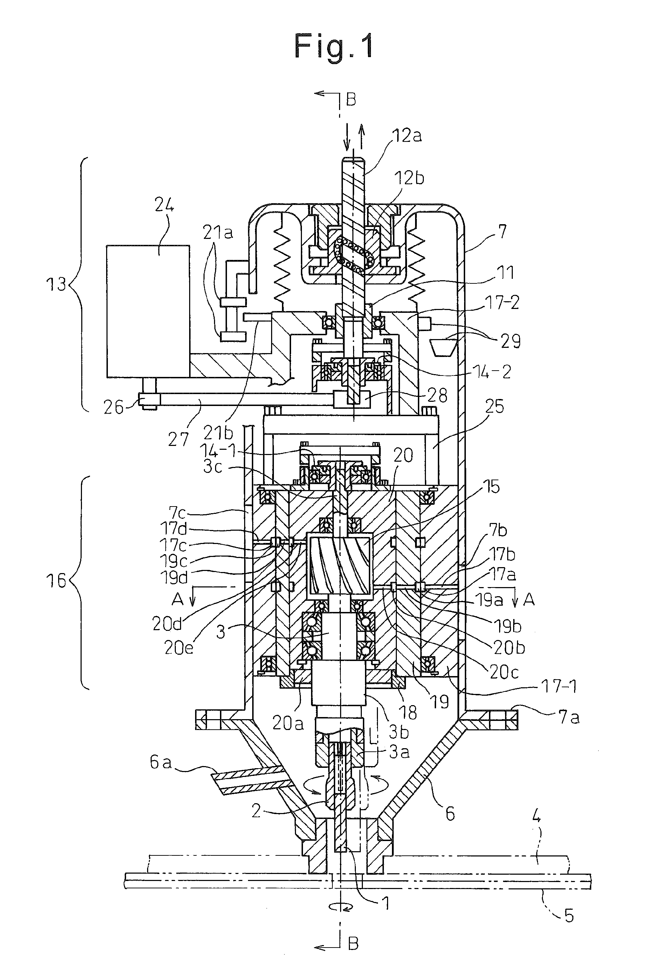

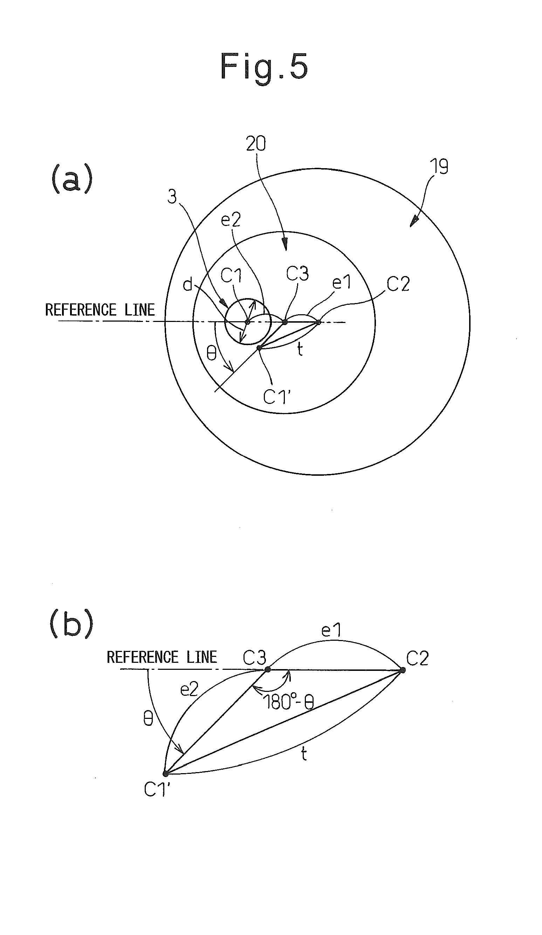

As shown in FIG. 1, an eccentric rotation drive mechanism 16 in a hole making apparatus of the present embodiment is provided with a cylindrical member (below, "inner cylinder") 20 which houses an air driving means which is comprised of a first air motor 15 (for example, turbine etc.) which is provided at a rotation shaft portion 3 so that an end mill or other hole making tool 1 rotates about an axis of the rotation shaft portion 3 (C1 of FIG. 5) and simultaneously revolves around an center axis of an eccentric cylindrical member (C2 of FIG. 5), a first reduction device 14-1 (for example, Harmonic Drive®) which is coupled to the rotation shaft portion 3 which extends from a holder 2 which holds the hole making tool, and an eccentric cylindrical member (below, "outer cylinder") 19 which is coupled to an output side of the reduction device, which houses a cylindrical member (inner cylinder) which houses inside it the rotation shaft portion which the first air motor 15 is provided with in a rotatable means at an eccentric position, and which revolves around a second axis C2 (center axis of outer cylinder) which is parallel with the first axis C1, as main components, the inner cylinder 20 being coupled to the outer cylinder 19 through the reduction device 14-1 and being fit with it to be combined.

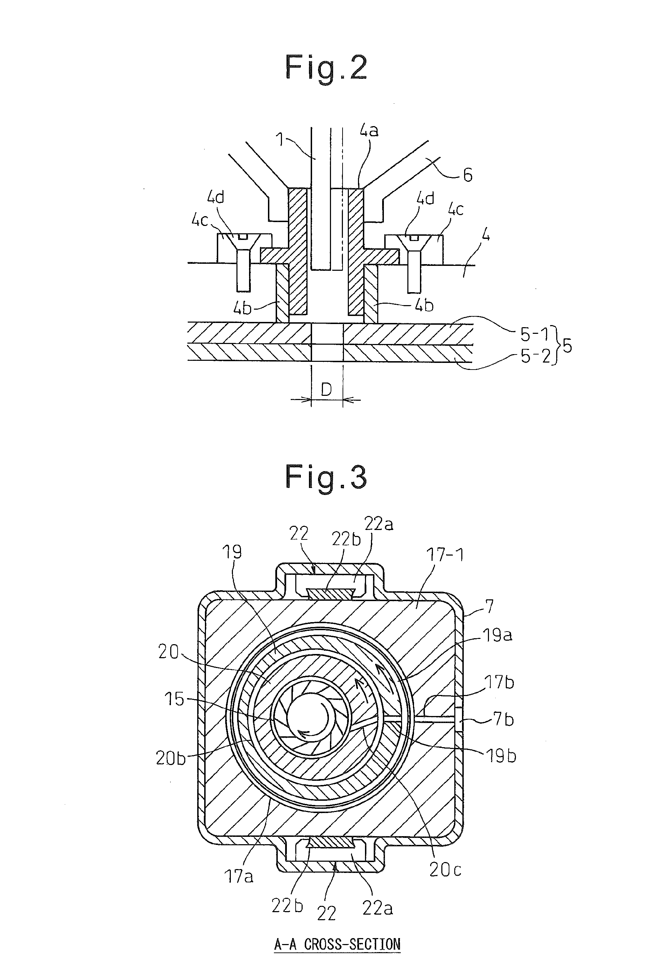

An introducing line of air which is fed to the first air motor 15 is a line which enters a first slide container 17-1 from an introducing aperture 7b which is provided at a casing 7 which is shown in cross-section in FIG. 1 and FIG. 3 (cross-sectional view along A-A of FIG. 1), successively passes through an introducing nozzle 17b, groove 17a, groove 19a, introducing nozzle 19b, groove 20b and introducing nozzle 20c, and reaches a first air motor 15. After making the first air motor 15 rotate, the air successively passes through the discharging line, that is, the discharging nozzle 20e, groove 20d, discharging nozzle 19d, groove 19c, groove 17c and discharging nozzle 17d which are shown in FIG. 1, and is discharged from a discharging aperture 7c which is provided at the casing 7 which is shown in FIG. 1. Below, the configuration of the introducing line and discharging line of the air which is fed to the air motor 15 will be explained.

As shown in FIG. 1, at the outer circumferential surface of the inner cylinder 20, annular grooves 20b, 20d are provided in order from the direction of the male thread 20a. From one location of the groove 20b, the introducing nozzle 20c is formed so as to direct radially inward. The introducing nozzle 20c passes through to the inner circumferential surface of the inner cylinder 20 and forms an introducing line of the air which is introduced to the first air motor 15. From a position of the groove 20d facing the introducing nozzle 20c, the discharging nozzle 20e is formed directed radially inward. The discharging nozzle 20e passes through to the inner circumferential surface of the inner cylinder 20 and forms a discharging line of the air which is introduced to the first air motor 15. The introducing nozzle 20c, as shown in FIG. 3, is provided by a predetermined angle in the radial direction and facilitates rotation of the first air motor 15. The discharging nozzle 20e as well, which is not shown in FIG. 3, like the introducing nozzle 20c, is provided by a predetermined angle in the radial direction and can facilitate discharge of air.

As shown in FIG. 1, at the outer circumferential surface of the outer cylinder 19, annular grooves 19a, 19c are provided in that order from the direction of the hole making tool 1. From one location of the groove 19a, an introducing nozzle 19b is formed so as to direct radially inward. The introducing nozzle 19b passes through to the inner circumferential surface of the outer cylinder 19 and is communicated with the introducing nozzle 20c of the inner cylinder 20. From a position of the groove 19c facing the introducing nozzle 19b, a discharging nozzle 19d is formed so as to direct radially inward. The discharging nozzle 19d passes through to the inner circumferential surface of the outer cylinder 19 and is communicated with the discharging nozzle 20e of the inner cylinder 20.

As shown in FIG. 1, at the inner circumferential surface of the first slide container 17-1, annular grooves 17a, 17c are provided in order from the direction of the end mill or other hole making tool 1. From one location of the groove 17a, an introducing nozzle 17b is formed so as to direct radially outward. The introducing nozzle 17b passes through to the outer circumferential surface of the first slide container 17-1 and is communicated with an introducing aperture 7b of the casing 7. From the position of the groove 17c facing the introducing nozzle 17b, a discharging nozzle 17d is formed so as to direct radially outward. The discharging nozzle 17d passes through to the outer circumferential surface of the first slide container 17-1 and is communicated with the discharging aperture 7c of the casing 7.

In the present embodiment, as shown in FIG. 1 and FIG. 3, there is provided the casing 7 in which are provided the first slide container 17-1 which is comprised of an eccentric cylindrical member (outer cylinder 19) which houses an inner cylinder 20 in which an air drive means, that is, a first air motor 15, is rotatably housed, which holds the outer cylinder 19 in a rotatable means, and which is provided with a guide rail 22b, which can slide in an axial direction and provided with sliders 22a (inside of which a large number of rollers are housed) which can be movably coupled to by guide rails 22b which are provided at the outer surface of the first slide container 17-1. In general, an assembly of a slider 22a inside of which a large number of rollers (bearings) are contained and a guide rail 22b is referred to as a "slide guide 22".

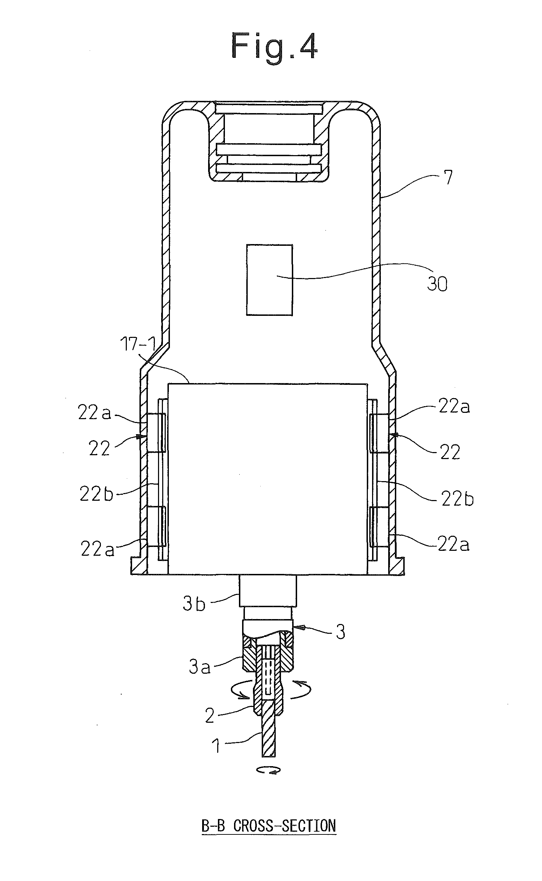

The first slide container 17-1, as shown in FIG. 3 and FIG. 4, slides on four sliders 22a, which are fixed on the inner surface of the casing 7 and are engaged in the axial direction, by two guide rails 22b which are fastened to the first slide container 17-1.

In the present invention, at a flange part 7a of the casing 7 which is shown in FIG. 1, as shown enlarged in FIG. 2 as well, a conical casing 6, which rapidly narrows toward the front end and at the front end of which a later explained taper lock member 4a is screwed, is attached by being fastened by bolts (not shown). It is preferable to be able to set the hole making apparatus positioned on the work table for the workpiece 5 which is fixed to the jig mounting plate 4 for attaching the hole making apparatus of the present invention.

As shown in FIG. 1 and FIG. 4, at the input side of the first reduction device 14-1 at the front end of the rotation shaft portion 3, a fitting part 3c of the rotation shaft portion 3 is fit whereby the rotation of the rotation shaft portion 3 is transmitted to the input side of the first reduction device 14-1. The outer cylinder 19 is coupled to the output side of the first reduction device 14-1 at the front end of the rotation shaft portion 3. As a result, the inner cylinder 20 which houses the first air motor 15 and the outer cylinder 19 which houses the inner cylinder 20 are held together with the first reduction device 14-1 at the front end of the rotation shaft portion 3 integrally in the first slide container 17-1. As explained in detail later, the rotation shaft portion 3 rotates about its own center axis, while the inner cylinder 20 revolves integrally with the outer cylinder 19 around the center axis of the outer cylinder 19 in an inverse rotational direction from that of the hole making tool 1.

For the first reduction device 14-1 at the end of the rotation shaft portion 3 at the opposite side from the hole making tool 1, a reduction device with a reduction ratio of preferably 1/140 to 1/70 or so, particularly preferably 1/120 to 1/80 (for example, Harmonic Drive®) is preferably used. Note that the present invention is not limited to this. As the reduction device, it is also possible to suitably apply a combination of the Harmonic Drive® and a differential gear mechanism. In this case, each the reduction ratio of the combined reduction devices is preferably 1/140 to 1/70 or so, particularly preferably 1/120 to 1/80.

For example, when the first reduction device 14-1 has a reduction ratio of 1/100, if the rotational speed of the hole making tool 1 (for example, end mill etc.) is 2000 to 3000 rpm, the revolution speed of the hole making tool 1 becomes 20 to 30 rpm. Therefore, these values can be suitably used for the hole making apparatus of the present invention.

As explained above, in the present embodiment, it is possible to make the directions of rotation of the input shaft and the output shaft of the first reduction device 14-1 at the end of the rotation shaft portion 3 opposite directions and perform a "down cut" where the rotational direction and the revolution direction of the hole making tool 1 are mutually different.

As the hole making tool 1 in the present invention, for example, a standard square end mill, roughing end mill, or other end mill of various tool materials may be used. For the end mill, for example, a φ4 mm to φ12 mm square end mill is preferably used. In an end mill which is used as the hole making tool 1 in the present invention, the bottom surface and side surface of the end mill are provided with respective cutting edges. The cutting edges at the bottom surface of the end mill shave away the surface of the workpiece 5 and the bottom of the hole, while the cutting edges at the side surface of the end mill shave away the inner surface of the hole. This end mill has a through hole in the axial center. It is possible to send cooling air or oil mist into the through hole to cool the cutting edges and simultaneously assist discharge of cutting chips.

The holder 2 may be configured to be able to hold an end mill or other hole making tool 1. For example, a collet chuck is preferable for the holder 2. By replacing the holder 2 which is attached to the front end of the rotation shaft portion 3, it is possible to use an end mill or other hole making tool 1 which has a broad range of diameters of φ4 mm to φ12 mm.

The rotation shaft portion 3, as shown in FIG. 1 and FIG. 4, preferably is comprised of a front end part 3a which fastens the holder 2, a step part 3b which extends from there in an axial direction, a first air motor 15, and a fitting part 3c which is fit to the input side of the first reduction device 14-1. The rotation shaft portion 3 is housed to be able to freely rotate about its axis C1 inside of the inner cylinder 20 through a plurality of bearings. To adjust the rotational speed of the first air motor 15 and the rotational speeds of the step part 3b and fitting part 3c of the rotation shaft portion, it is also possible to provide speed reduction mechanisms such as planetary gear speed reduction mechanisms or other speed changing mechanisms at the step part 3b between the first air motor 15 and the front end part 3a and the shaft portion between the first air motor 15 and the fitting part 3c respectively.

The eccentric rotation drive mechanism 16, as shown in FIG. 1 and FIG. 3, is mainly comprised of the inner cylinder 20 in which the rotation shaft portion 3, the first air motor 15, etc. are contained and an outer cylinder 19 which houses the inner cylinder 20. The inner cylinder 20, for example, contains the rotation shaft portion 3 and bearing, and is inserted into the outer cylinder 19 to be fit with it. The outer circumferential surface of the inner cylinder 20 is made tapered in shape so that the outside diameter becomes smaller the further in the direction of the rotation shaft portion 3 and the front end part 3a. Further, by inserting the inner cylinder 20 into the outer cylinder 19 and fastening the male thread 20a by the eccentricity adjusting nut 18, the inner cylinder 20 is pulled out and is fixed to the outer cylinder 19 at the position where the both of tapered surfaces thereof connect. By loosening the fastening by the eccentricity adjusting nut 18 and by turning the inner cylinder 20 to the outer cylinder 19 to shift the phase, the amount of eccentricity can be adjusted. As shown in FIG. 1 and FIG. 5, here, the center axis C2 of the inner circumferential surface of the outer cylinder 19 (tapered surface) and the center axis C3 of the outer circumferential surface of the inner cylinder 20 (tapered surface) are respectively eccentric from the first axis C1 of the rotation shaft portion 3. Therefore, by adjusting the phase of the inner cylinder 20 to the outer cylinder 19, it is possible to adjust the distance between the first axis C1 (rotational center) and the second axis C2 (revolution center, center axis of the outer cylinder 19).

As shown in FIG. 5, the ratio (d:t) of the diameter d of the hole making tool 1 (for example, end mill) and the distance between the first axis C1 and the second axis C2 (amount of eccentricity t) in the present invention may be 10:0.1 to 10:1.5 or so (in figure, shown exaggeratedly).

Due to this configuration, as shown in FIG. 1 and FIG. 5, it is possible to make the rotation shaft portion 3 rotate so as to make the hole making tool 1 (for example, end mill etc.) rotate about the first axis C1 at a high speed, and possible to make the input side of the first reduction device 14-1 rotate and make the outer cylinder 19 which is coupled to the output side of the first reduction device 14-1 and the inner cylinder 20 which is housed in the outer cylinder 19 revolve by a predetermined reduction ratio around the second axis C2 in the opposite direction of that of the rotation shaft portion 3, in the present embodiment the hole making tool 1 rotate about the axis first C1 of the rotation shaft portion 3 in the clockwise direction at a high speed and simultaneously revolve around the second axis C2 of the outer cylinder 19 in the counterclockwise direction at a low speed so as to machine a hole in the workpiece 5.

In the hole making apparatus of the present invention, the flange part 7a at the front end of the casing 7, as shown in FIG. 1 and FIG. 2, has a conical casing 6 fastened to it by bolts etc. An annular taper lock member 4a is attached to front end of the conical casing 6. At the time of hole making, the taper lock member 4a is inserted into a tubular bush 4b which is pressed fit in the jig mounting plate 4 and then is rotated so that the tapered surface of the flange part of the taper lock member 4a contacts the tapered surface of the tapered surface bush 4c, which is fastened by fastening bolts to the jig mounting plate 4 at 180° symmetric positions, whereby the hole making apparatus is fastened rigidly in place. As a result, on the jig mounting plate 4, the hole making tool 1 (for example, end mill) attached to the hole making apparatus is arranged at an eccentric position at the inside of the circle of the front end part of the conical casing 6. For example, if the diameter d of the hole making tool (for example, end mill) is 5 mm and the amount of eccentricity t of the end mill is 0.5 mm, the machined hole diameter D of the workpiece 5 comprised of a laminate of a CFRP plate 5-1 and Ti alloy plate 5-2 (see FIG. 2) amounts to 6 mm, so it is necessary to enlarge the diameter of the hole at the front end part of the conical casing 6 by about 5 to 20% from 6 mm.

The conical casing 6 is provided with a suction hole 6a for discharging the chips which are generated at the time of machining by air suction.

In the present embodiment, as the feed drive mechanism which makes the outer cylinder 19 of the eccentric cylindrical member which houses the inner cylinder 20 containing the first air motor 15 move in the axial direction, as shown in FIG. 1, it is provided with the feed drive mechanism 13 which is driven by the second air motor 24.

For example, the feed drive mechanism 13 in the present invention is provided with a second slide container 17-2 which is provided at the back of the first slide container 17-1 through a coupling member 25, a fixed nut 12b which is provided at the bottom of the casing 7, a second timing pulley (driven side timing pulley) 28 which is contained in the second slide container 17-2, a second reduction device 14-2 which has an input shaft which coincides with the shaft of the second timing pulley (for example, Harmonic Drive®), and a ball screw 12 which is coupled to an output side of the reduction device through a coupling member 11 (provided inside of the second slide container 17-2) and which is held rotatably at the fixed nut 12b (for example, ball nut etc.). Furthermore, the feed drive mechanism 13 is provided with a first timing pulley (drive side timing pulley) 26 which is attached to a shaft of a second air motor 24 and a second timing pulley (driven side timing pulley) 28 which is coupled by the timing belt 27 and is provided with an inverse rotatable air motor, that is, a second air motor 24, which slides through the coupling member 25 in synchronization with the first slide container 17-1. To further adjust the rotational speed of the second air motor 24 and the rotational speed of ball screw 12, the shaft portion between the output shaft of the second reduction device 14-2 and the ball screw 12 may be provided with a planetary reduction gear or other reduction gear or other speed changing mechanism. Note that, as shown in FIG. 4, the casing 7 is provided with an aperture 30. The connecting part of the second slide container 17-2 to the second air motor 24, the switching lever 21b, and the timing belt 27 which are shown in FIG. 1 pass through this aperture 30 to stick out to the outside of the casing 7.

In the present invention, for example, the outer circumferential surface of the ball screw 12a is formed with a helical thread groove. The ball screw 12a has a fixed nut 12b, that is, a fixed nut 12b (for example, a ball nut) engaged with it through a large number of balls. The inner circumferential surface of the fixed nut 12b, that is, ball nut, is formed with a helical thread groove. Further, the fixed nut 12b, that is, ball nut, is formed with a circular path using holding members etc. provided with connecting grooves. Balls circulate inside of the circular path.

The configuration of the air piping for the air drive mechanism of the present embodiment will be explained next. Due to this configuration, the hole making apparatus of the present embodiment is operated by just air drive using a single air source without using an electric motor. This is preferable when cutting a CFRP laminate from the viewpoints of maintaining operability, explosion proofing, safety, etc.

To feed air to the hole making apparatus of the present invention, for example, a channel which is branched from the air source (air storage tank etc.) is used to form the drive and control circuit of the first air motor and the second air motor.

Furthermore, in the present invention, in the same way as the above-mentioned air feed mechanism, a rotational speed control device is provided which detects a predetermined position in an axial direction of the first slide container by speed changing switches 29, that is, detects a predetermined position of a front end of the hole making tool 1, that is, end mill, and controls the rotational speed of the first air motor 15 and the rotational speed of the second air motor 24 so as to control the feed speed.

Furthermore, in the present invention, the feed drive mechanism is switched between advance/retreat by switching the direction of rotation of the second air motor which is connected in the forward/backward rotational direction by the position signal of the advance, stop, and return switching lever 21b. The speed of advance of the feed drive mechanism is switched by detection of the predetermined position in the axial direction by the speed changing switches 29.

The present embodiment is preferably configured by providing a second slide container 17-2 in which the feed drive mechanism 13 is contained at the back of the first slide container 17-1 in which the eccentric rotation drive mechanism 16 is contained. However by providing the feed drive mechanism 13 and the coupling member 25 at the side of the first slide container 17-1 which contains the eccentric rotation drive mechanism 16, it is also possible to provide the feed drive mechanism 13 at the side of the first slide container 17-1 which contains the eccentric rotation drive mechanism 16.

Further, it is also possible to attach the eccentric rotation drive mechanism 16 which is driven by the first air motor 15, the first slide container 17-1, and the members relating to driving the eccentric rotation drive mechanism 16 at the spindle of a CNC machining center or drilling machine and combine them with the X-, Y-, and Z-direction feed mechanisms of the machining center.

Below, the method of operation of the hole making apparatus of the present embodiment will be explained in brief.

In the hole making apparatus of the present invention, for example, first, the above-mentioned switching lever 21b to change the feed to advance, stop, and return, which is provided near the stoppers 21a, is pushed to the advance side to start the advancing motion. The hole making tool machines a spiral hole in the CFRP laminate 5-1 by high speed rotation and high speed feed while advancing. Next, when the speed changing switches 29 which are operated at a position right before the Ti alloy plate 5-2 is machined, the speed adjusting check valve operates to adjust the air which is fed to the two air motors for rotation and feed motions so as to adjust the rotational and revolution speed and feed rate of the hole making tool and machine a hole in the Ti alloy plate under machining conditions suitable for Ti alloy. After the hole machining operation in the Ti alloy plate finishes, the switching lever returns to the stop position and the advance feed is stopped.

Finally, when pushing the above-mentioned switching lever to the return side, the hole making tool executes a zero cut operation of the Ti alloy plate and the CFRP laminate (finishing) by a clockwise high speed rotation and a counterclockwise low speed revolution as the same as the start of the advancing process while returning by high feed rate to the start position, the switching lever returns to the stop position where the retreat feed motion is stopped, and the process of machining one hole ends.

Below, the method of operation of the hole making apparatus of the present invention will be explained in further detail.

The compressed air which is sent from the introducing aperture 7b to the introducing line of the eccentric rotation drive mechanism 16 in the hole making apparatus of the present invention makes the first air motor 15 rotate, after that is discharged from the discharging aperture 7c of the eccentric rotation drive mechanism 16. At this time, the rotation shaft portion 3 rotates clockwise when viewed from above, while the inner cylinder 20 and the outer cylinder 19 revolve counterclockwise integrally. As a result, the hole making tool 1, that is, end mill, rotates at a high speed clockwise by a predetermined rotational speed which is adjusted for machining a hole in a CFRP plate 5-1 while revolving at a low speed counterclockwise so as to machine a hole.

In the above-mentioned hole making operation, at the same time as the above-mentioned operation, compressed air is fed into the suction hole of the second air motor 24 to drive the feed drive mechanism 13 as well. The feed drive mechanism advances at a predetermined feed rate for machining a hole in a CFRP or other fiber-reinforced plastic or their laminates (for example, the CFRP plate 5-1). Next, right before the cutting edge reaches the next material, that is, the Ti alloy plate 5-2, the speed changing switches 29 operates and a signal to adjust a rotational speed is sent. This being so, the rotational and revolution speed and the feed rate are switched and adjusted to predetermined speeds to set the cutting conditions for machining a hole in the Ti alloy plate 5-2.

When finishing machining a hole in the Ti alloy plate 5-2 at the above-mentioned rotational and revolution speed and feed rate, the hole making apparatus stops once due to the contact signal of the stoppers. Further, by switching the air feed valve to return, the hole making tool 1, that is, the end mill, retreats while rotating clockwise at a high speed and revolving counterclockwise at a low speed in the same way as at the time of advance, but at this time, the inner surface of the hole which was formed at the time of advance is finished by the zero cut operation by a predetermined high rotational speed and high feed rate (retreat) different from those of the time of advance.

According to the hole making apparatus of the present invention, by performing intermittent cutting by an extremely short period, it is possible to keep down the rise in temperature at the cutting location, so a CFRP laminate, GFRP laminate, or other laminate of fiber-reinforced plastic layers or composite of the laminate (for example, CFRP plate 5-1) and Ti alloy plate 5-2 stacked together (workpiece 5) can be machined economically at a high accuracy and therefore a hole making apparatus which satisfies this type of hole making need can be provided.

Further, in the hole making apparatus of the present invention, two air motors may be respectively used to operate the eccentric rotation drive mechanism and the feed drive mechanism to drive the eccentric rotational motions and drive the feed motion by separate systems of air feed lines, so in machining a hole in a workpiece, it is possible to operate the eccentric rotational drives and feed drive separately and possible to more freely and easily adjust and set the combination of the speeds of rotation and revolution and feed rate. This becomes more advantageous for machining composite materials and hard-to-machine materials.

Further, in the present embodiment, it is possible to maintain the directions of rotation and revolution of the hole making tool at the time of advance and retreat of the eccentric rotation drive mechanism in the hole making apparatus as the same directions and it becomes possible to execute finishing operations efficiently by zero cut.

Further, in the present embodiment, it is possible to prevent excessive heat generation at the machined surface and thereby extend the life of the hole making tool.

Below, a second embodiment of the present invention will be explained.

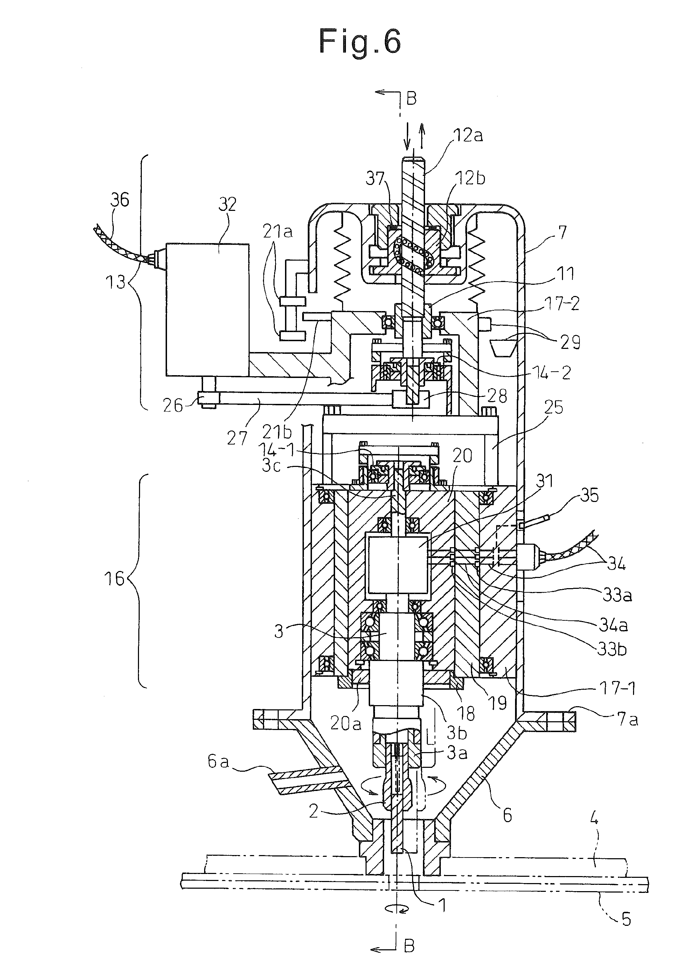

If replacing the first air motor and second air motor which are shown in FIG. 1 with the first electric motor 31 and second electric motor 32 such as shown in FIG. 6 to obtain an electric motor-drive hole making apparatus and controlling the rotational speeds of the two electric motors by electronic control devices, it is possible to improve the hole making performance of the hole making apparatus much more compared with the case of air motor drive.

As shown in FIG. 6, the first electric motor 31 is connected to a power cord 34, while the second electric motor 32 is connected to a power cord 36. The power cord 34 passes through the first slide container 17-1 and supplies power to the power cord 34a which is provided passing through the outer cylinder 19 by the brush 33a which is provided at the inner surface of the slide container 17-1. Furthermore, power is supplied to the first electric motor 31 by the brush 33b which is provided at the inner surface of the outer cylinder 19 (or by something which has a similar function to a brush). Furthermore, a power switch 35 of the first electric motor 31 is attached near the set position of the power cord 34 of the slide container 17-1. When using a servo motor as an electric motor, it is possible to mount the resolver or encoder which is directly connected to the motor rotor by using the power cord and signal cord for a phase signal sensor by a similar method as the brush 33a and brush 33b.

Further, at the end of the fixed nut 12b, a force detection sensor 37 is assembled. The electric signal of the force detection sensor 37 is used to automatically control the rotational speeds of the first electric motor 31 and second electric motor 32. For example, an electric signal of the force detection sensor, where the thrust force when machining a Ti alloy is five to six times greater than that of a CFRP laminate, is inputted into the electronic control devices of the two electric motors and enables automatic switching to the machining conditions suitable for a machined material so as to machine a hole and thereby enables efficient machining of a hole in a stack of different materials. After machining the hole and then passing through, the electric signal of the force detection sensor becomes about zero. When the electrical signal becomes about zero, the first electric motor and second electric motor can be switched to a fast return mode and returned to the start position where they are stopped.

By fastening and positioning the electric motor-drive hole making apparatus with a high rigidity to a not shown articulated robot hand which has five or more degrees of freedom, it is possible to machine a hole in a hard-to-machine curved material without using a jig fastener and/or conical casing 6 shown in FIG. 2.

When fastening the electric motor-driven hole making apparatus to the articulated robot hand and machining a hole, the machining area can be covered with an extendable accordion-like bellows (not shown) to enable all of the cutting chips to be sucked up and collected through a suction hole which is provided at the bellows.

Further, the eccentric rotation drive mechanism 16 which is driven by the first electric motor 31, its first slide container 17-1, and the members relating to the driving of the eccentric rotation drive mechanism 16 can also be attached to the spindle of a CNC machining center or drilling machine and combined with the X-, Y-, and Z-direction feed mechanisms of the machining center.

Above, embodiments of the present invention have been explained, but the present invention is not limited to these embodiments in any way. They are merely illustrations. The present invention can of course be worked in various other ways within a scope not deviating from the gist of the present invention. The scope of the present invention is shown by the description in the claims. Furthermore, it includes equivalent meanings to the descriptions in the claims and all changes within the scope of the claims.

The hole making apparatus according to the present invention can be applied to a hole making apparatus which uses an end mill etc. as a hole making tool to machine holes in a workpiece of fiber-reinforced plastics (CFRP) etc.

Further, in the hole making apparatus of the present invention, a rise in temperature of the machined location can be suppressed, so good results can be expected even for machining holes in heat resistant resins which are relatively strong in high temperature working and do not relatively change in property under a high temperature (for example, heat resistant epoxy-based resins and heat resistant heat setting type resins), fiber-reinforced plastics, their laminates, composite materials of their laminates and hard-to-machine metals (titanium-based alloys and Inconel-based alloys).

Reference Signs List
- 1: hole making tool
- 2: holder
- 3: rotation shaft portion
- 3a: front end part
- 3b: step part
- 3c: fitting part
- 4: jig mounting plate
- 4a: taper lock member
- 4b: tubular bush
- 4c: tapered surface bush
- 4d: fastening bolt
- 5: workpiece
- 5-1: CFRP (carbon fiber-reinforced plastic) plate
- 5-2: Ti alloy plate
- 6: conical casing
- 6a: suction hole
- 7: casing
- 7a: flange part
- 7b: introducing aperture
- 7c: discharging aperture
- 11: coupling
- 12a: ball screw
- 12b: fixed nut
- 13: feed drive mechanism
- 14-1: first reduction device (Harmonic Drive®)
- 14-2: second reduction device (Harmonic Drive®)
- 15: first air motor
- 16: eccentric rotation drive mechanism
- 17-1: first slide container
- 17-2: second slide container
- 17a, 19a, 20b: groove (introduction use)
- 17c, 19c, 20d: groove (discharging use)
- 17b, 19b, 20c: introducing nozzle
- 17d, 19d, 20e: discharging nozzle
- 18: eccentricity adjusting nut
- 19: outer cylinder (or eccentric cylindrical member)
- 20: inner cylinder (or cylindrical member)
- 20a: male thread
- 21a: stopper
- 21b: switching lever
- 22: slide guide
- 22a: slider
- 22b: guide rail
- 24: second air motor
- 25: coupling member
- 26: first timing pulley (drive side timing pulley)
- 27: timing belt
- 28: second timing pulley (driven side timing pulley)
- 29: speed changing switch
- 30: aperture
- 31: first electric motor
- 32: second electric motor
- 33a, 33b: brush
- 34, 34a: power cord
- 35: power switch
- 36: power cord
- 37: force detection sensor
- C1,: C1' first axis (axis of hole making tool, axis of rotation shaft portion)
- C2: second axis (eccentric axis, center axis of outer cylinder)
- C3: centerline of inner cylinder
- d: diameter of hole making tool
- D: machined hole diameter
- e1, e2: amount of eccentricity
- t: amount of eccentricity of hole making tool
- θ: phase angle

## Claims

1. A hole making apparatus comprised of
an eccentric rotation drive mechanism (16) comprised of passages (20b, 20c, 20d, 20e) for air for causing a first air motor (15) which is provided at an intermediate part in a longitudinal direction of a rotation shaft portion (3) on an axis of a hole making tool (1) to rotate and an eccentric cylindrical member (19) in which a cylindrical member (20) which forms said passages are fit, which is coupled to said first air motor (15) through a first reduction device (14-1), and which has an eccentric axis (center axis of outer cylinder) which is parallel with the axis of the hole making tool (1) integrally formed together,
a first slide container (17-1) in which said eccentric rotation drive mechanism (16) is rotatably contained,
a feed drive mechanism (13) which is provided with a second air motor (24), transmitting means (26, 27, 28) by which a rotational motion by said second air motor (24) can be transmitted, a second reduction device (14-2), a ball screw (12a) and a fixed nut (12b),
a second slide container (17-2) which contains a part of said transmitting means, said second reduction device (14-2) and a part of said ball screw (12a) and which advances and retreats in the axial direction of the hole making tool (1) by said feed drive mechanism (13), and,
a casing (7) in which said first slide container (17-1) and said second slide container (17-2) are contained,
said casing (7) is provided with a fixed nut (12b) with which said ball screw (12a) is engaged at an opposite end to said hole making tool (1) and with a sliding means (22a) for making said first slide container (17-1) and said second slide container (17-2) slide,
said first slide container (17-1) and said second slide container (17-2) are coupled by a coupling member (25), and
said hole making tool (1) can rotate about its axis and simultaneously revolve around said eccentric axis (center axis of outer cylinder) of said eccentric cylindrical member (19) to make a hole in a workpiece (5).

2. A hole making apparatus as set forth in claim 1, **characterized in that**
said transmitting means is provided with
a driven side timing pulley (28) which is provided inside of said second slide container (17-2),
a drive side timing pulley (26) which is coupled to an output shaft of said second air motor (24), and
a timing belt (27) which couples said drive side timing pulley (26) with said driven side timing pulley (28),
an input shaft of said second reduction device (14-2) is coupled to an end of a shaft of said driven side timing pulley (28), said ball screw (12a) is coupled to an output shaft of said reduction device (14-2), and furthermore said ball screw (12a) is engaged with said fixed nut (12b),
said second air motor (24) is made to rotate so as to make said drive side timing pulley (26) rotate, the rotation is transmitted by said timing belt (27) to said driven side timing pulley (28) so as to drive said second slide container (17-2), and thereby said first slide container (17-1) which contains said eccentric rotation drive mechanism (16) is made to advance and retreat in said axial direction and machine a hole in said workpiece (5).

3. A hole making apparatus as set forth in claim 1, **characterized in that**
said eccentric rotation drive mechanism (16) is provided with said holder (2) which holds said hole making tool (1) at a front end of a rotation shaft portion (3),
the axis of said hole making tool (1) has a center axis of the rotation which is eccentric from the center axis of said cylindrical member (20),
said first reduction device (14-1) is coupled to an opposite end from said holder (2) of said cylindrical member (20),
said eccentric cylindrical member (19) is formed integrally with said cylindrical member (20) contained inside and is coupled to the output side of said first reduction device (14-1), and said rotation shaft portion (3) is contained rotatably at a position which is eccentric from the center axis of said eccentric cylindrical member (19) and is revolvable around an eccentric axis (center axis of outer cylinder) which is parallel with the axis of said hole making tool (1), and
when the drive power of said second air motor (24) of said feed drive mechanism (13) is used to make said eccentric rotation drive mechanism (16) move in the longitudinal direction of said rotation shaft portion (3), said first air motor (15) causes said rotation shaft portion (3) to rotate, said hole making tool (1) to rotate and an input shaft of said first reduction device (14-1) connected to the end of said rotation shaft portion (3) to rotate simultaneously, so that said eccentric cylindrical member (19) which is coupled to an output side of said first reduction device (14-1) revolves by a predetermined reduction ratio around the eccentric axis (center axis of outer cylinder) so as to make said hole making tool (1) rotate about its axis and simultaneously revolve around said eccentric axis (center axis of outer cylinder).

4. A hole making apparatus as set forth in any one of claims 1 to 3, **characterized in that** the hole making of the workpiece is performed by a down cut where said rotational direction and said revolution direction of said hole making tool (1) are different from each other.

5. A hole making apparatus as set forth in any one of claims 1 to 4, **characterized in that** said coupling member (25) couples with said first slide container (17-1) at an end of said second slide container (17-2) at an opposite side to said holder of said hole making tool (1) which is provided at the front end of said rotation shaft portion (3), and said ball screw (12a) and said fixed nut (12b) are arranged on substantially the same line with said center axis of said eccentric cylindrical member (19).

6. A hole making apparatus as set forth in any one of claims 1 to 5, **characterized in that** said hole making tool (1) is an end mill.

7. A hole making apparatus as set forth in any one of claims 1 to 6, **characterized in that** the workpiece (5) is a laminate of fiber-reinforced plastic layers or a composite material of said laminate composed of fiber-reinforced plastic layers and a metal material.

8. A hole making apparatus as set forth in any one of claims 1 to 7, **characterized in that** said eccentric rotation drive mechanism (16) and said feed drive mechanism (13) of said hole making apparatus are driven independently by respective single air motors (15, 24) which are driven by a single air source.

9. A hole making apparatus as set forth in any one of claims 1 to 8, **characterized in that** said eccentric rotation drive mechanism (16) and said feed drive mechanism (13) of said hole making apparatus are driven by using a single switching lever (21b) which is provided at the second slide container (17-2) and by using stoppers (21a) so as to change between advance and retreat of said feed drive mechanism (13), by using a speed changing switch (29) to detect a predetermined position in the axial direction of said eccentric rotation drive mechanism (16), so that the speeds of rotation and revolution of the hole making tool (1) contained in said eccentric rotation drive mechanism (16) and the advance feed rate of said feed drive mechanism (13) can be changed separately.

10. A hole making apparatus comprised of
an eccentric rotation drive mechanism (16) comprised of first power supplying means (34a, 33b) for causing a first electric motor (31) which is provided at an intermediate part in a longitudinal direction of a rotation shaft portion (3) on an axis of a hole making tool (1) to rotate and an eccentric cylindrical member (19) in which a cylindrical member (20) which contains said first power supplying means is fit, which is coupled to said first electric motor (31) through a first reduction device (14-1), and which has an eccentric axis (center axis of outer cylinder) which is parallel with the axis of the hole making tool (1) integrally formed together,
a first slide container (17-1) in which said eccentric rotation drive mechanism (16) is rotatably contained,
a feed drive mechanism (13) which is provided with a second electric motor (32), transmitting means (26, 27, 28) by which a rotational motion by said second electric motor (32) can be transmitted, a second reduction device (14-2), a ball screw (12a), and a fixed nut (12b),
a second slide container (17-2) which contains a part of said transmitting means, said second reduction device (14-2), and a part of said ball screw (12a) and which advances and retreats in the axial direction of the hole making tool (1) by said feed drive mechanism (13), and,
a casing (7) in which said first slide container (17-1) and said second slide container (17-2) are contained, and,
said hole making tool (1) can rotate about its axis and simultaneously revolve around said eccentric axis (center axis of outer cylinder)of said eccentric cylindrical member (19) to machine a hole in a workpiece (5).

11. A hole making apparatus as set forth in claim 10, **characterized in that**
said transmitting means is provided with
a driven side timing pulley (28) which is provided inside of said second slide container (17-2),
a drive side timing pulley (26) which is attached to an output shaft of said second electric motor (32), and,
a timing belt (27) which couples said drive side timing pulley (26) with said driven side timing pulley (28),
an input shaft of said second reduction device (14-2) is coupled to an end of a shaft of said driven side timing pulley (28), said ball screw (12a) is coupled to an output shaft of said reduction device (14-2), and furthermore said ball screw (12a) is engaged with said fixed nut (12b),
said second electric motor (32) is made to rotate so as to make said drive side timing pulley (26) rotate, the rotation is transmitted by said timing belt (27) to said driven side timing pulley (28) so as to drive said second slide container (17-2), and thereby said first slide container (17-1) which contains said eccentric rotation drive mechanism (16) is made to advance and retreat in said axial direction and machine a hole in said workpiece (5).

12. A hole making apparatus as set forth in claim 10, **characterized in that**
said eccentric rotation drive mechanism (16) is provided with said holder (2) which holds said hole making tool (1) at a front end of a rotation shaft portion (3),
the axis of said hole making tool (1) has a center axis of the rotation which is eccentric from the center axis of said cylindrical member (20),
said first reduction device (14-1) is coupled to an opposite end from said holder (2) of said cylindrical member (20),
said eccentric cylindrical member (19) is formed integrally with said cylindrical member (20) contained inside and is coupled to the output side of said first reduction device (14-1), and said rotation shaft portion (3) is contained rotatably at a position which is eccentric from the center axis of said eccentric cylindrical member (19) and is revolvable around an eccentric axis (center axis of outer cylinder) which is parallel with the axis of said hole making tool (1), and
when the drive power of said second electric motor (32) of said feed drive mechanism (13) is used to make said eccentric rotation drive mechanism (16) move in the longitudinal direction of said rotation shaft portion (3), said first electric motor (31) causes said rotation shaft portion (3) to rotate to make said hole making tool (1) to rotate and an input shaft of said first reduction device (14-1) connected to the end of said rotation shaft portion (3) to rotate simultaneously, so that said eccentric cylindrical member (19) which is coupled to an output side of said first reduction device (14-1) revolves by a predetermined reduction ratio around the eccentric axis (center axis of outer cylinder) so as to make said hole making tool (1) rotate about its axis and simultaneously revolve around said eccentric axis (center axis of outer cylinder).

13. A hole making apparatus as set forth in any one of claims 10 to 12, **characterized in that** the hole making of the workpiece is performed by a down cut where said rotational direction and said revolution direction of said hole making tool (1) are different from each other.

14. A hole making apparatus as set forth in any one of claims 10 to 13, **characterized in that** said coupling member (25) couples with said first slide container (17-1) at an end of said second slide container (17-2) at an opposite side to said holder (2) of said hole making tool (1) which is provided at the front end of said rotation shaft portion (3), and said ball screw (12a) and said fixed nut (12b) are arranged on substantially the same line with the center axis of said eccentric cylindrical member (19).

15. A hole making apparatus as set forth in any one of claims 10 to 14, **characterized in that** said hole making tool (1) is an end mill which has a through hole at its axial center and cooling air or oil mist is fed through said hole to cool the cutting edges and simultaneously assist the discharge of cutting chips.

16. A hole making apparatus as set forth in any one of claims 10 to 15, **characterized in that** the workpiece (5) is a laminate of fiber-reinforced plastic layers or a composite material of said laminate composed of fiber-reinforced plastic layers and a metal material.

17. A hole making apparatus as set forth in any one of claims 1 to 7 and 10 to 16, **characterized in that** said eccentric rotation drive mechanism (16) and said feed drive mechanism (13) of said hole making apparatus are driven by using a single switching lever (21b) which is provided at the second slide container (17-2) and by using stoppers (21a) so as to switch between advance and retreat of said feed drive mechanism (13), by using a speed changing switch (29) to detect a predetermined position in the axial direction of said eccentric rotation drive mechanism (16), so that the speeds of rotation and revolution of the hole making tool (1) contained in eccentric rotation drive mechanism (16) and the advance feed rate of said drive mechanism (13) can be changed separately.

18. A hole making apparatus as set forth in any one of claims 1 to 7 and 10 to 17, **characterized in that** said eccentric rotation drive mechanism (16) and said feed drive mechanism (13) of said hole making apparatus are driven by using a single switching lever (21b) which is provided at the second slide container (17-2) and by using a change in magnitude of an electrical signal of a force detection sensor (37) which is built into the end of said fixed nut (12b) after advance driving of said feed drive mechanism (13) so as to automatically change the speeds of rotation and revolution of the hole making tool (1) which is contained in said eccentric rotation drive mechanism (16) and automatically switch the advance speed of said feed drive mechanism (13) and, furthermore, further change the speeds of rotation and revolution of said hole making tool (1) and automatically change to high speed retreat drive of said feed drive mechanism (13) after the electrical signal of said force detection sensor (37) becomes about zero, and automatically stop after returning to the start position.

19. A hole making apparatus as set forth in any one of claims 1 to 7 and 10 to 18 **characterized in that** said hole making apparatus which is driven by said first and second electric motors (31, 32) is fastened to a hand of an articulated robot which has at least five degrees of freedom.

20. A CNC machining center **characterized in that** an eccentric rotation drive mechanism (16) which is driven by a first electric motor (31) in a hole making apparatus of claim 10, first slide container (17-1) of said hole making apparatus, and the members as set forth in claim 10 relating to the drive of said eccentric rotation drive mechanism (16) at least are attached to a spindle of said CNC machining center or a drilling machine and are combined with X-, Y-, and Z-direction feed mechanisms of said machining center.

21. A CNC machining center **characterized in that** an eccentric rotation drive mechanism (16) which is driven by a first air motor (15) in said hole making apparatus of claim 1, first slide container (17-1) of said hole making apparatus, and the members as set forth in claim 1 relating to the drive of said eccentric rotation drive mechanism (16) at least are attached to a spindle of said CNC machining center or a drilling machine and are combined with X-, Y-, and Z-direction feed mechanisms of said machining center.

22. A hole making apparatus as set forth in any one of claims 1 to 7 and 10 to 18 **characterized in that** the machining area of said hole making tool (1) is covered by an expandable accordion-like bellows and all of the cutting chips can be sucked up and collected through a suction hole in said bellows.
